# EUROPEAN PATENT SPECIFICATION

(11) **EP 0 518 659 B1**
(45) Date of publication and mention of the grant of the patent: **29.01.1997**
(21) Application number: 92305348.2
(22) Date of filing: 11.06.1992
(51) Int. Cl.: H01M 4/12, H01M 6/06, H01M 4/42, H01M 4/62

(54) **Alkaline battery**
Alkalische Batterie
Pile alcaline

(30) Priority: 11.06.1991 JP 165178/91; 31.10.1991 JP 311432/91
(43) Date of publication of application: 16.12.1992
(60) Divisional application: 95202674.8
(73) Proprietor: FUJI ELECTROCHEMICAL CO.LTD., Minatoku Tokyo 105 (JP)
(72) Inventor: Shinoda, Kenichi, Toyohashi-shi, Aichi (JP); Izumi, Akihide, Kosai-shi, Sizuoka (JP); Murakoshi, Mitsuo, Hamana-gun, Sizuoka (JP); Tsutsui, Kiyohide, Kosai-shi, Sizuoka (JP); Yamashita, Katsuhiro, Toyohashi-shi, Aichi (JP); Tsuzuki, Hienori, Gamagouri-shi, Aichi (JP); Matsuo, Takashi, Kosai-shi, Shizuoka (JP)
(74) Representative: Charlton, Peter John

(56) References cited:
- FR-A- 2 634 597
- PATENT ABSTRACTS OF JAPAN vol. 9, no. 47 (E-299)27 February 1985 & JP-A-59 186 256 ( MATSUSHITA )

## Description

The present invention relates to a mercury eliminated alkaline battery. More specifically, the invention relates to an alkaline battery, which is improved in mixing ability and dispersing ability of zinc powder and effective metal in alkaline electrolyte, and can eliminate degradation of discharge ability under heavy load and low temperature.

In a conventional alkaline battery, a small amount of mercury is used for forming a amalgam for increasing corrosion resistance by elevating hydrogen overvoltage of zinc used as primary active material for negative electrode or cathode, and for restricting passivation of zinc by converting into zinc oxide.

An example of the use of amalgamated zinc in the formation of a gel form negative electrode is given in Japanese Patent Laid-open (Kokai) No. 59-186256, in which a mercury concentration of 2% is stated to be optimal.

However, since mercury is harmful substance, there have been progressed attempts to avoiding mercury in the recent years. Among various technologies for avoiding mercury, the most advanced technology in the prior art is to add a small amount of effective metal other than mercury, such as lead, aluminium, indium, gallium, bismuth or the like to zinc for alloying. Various studies have been made with respect to influence and so forth of kind of materials to be added or adding amount for the performance of the battery, by varying compositions with variety of effective metals.

Separately from the method of alloying of zinc, there is another attempt for adhering effective metal, such as lead, aluminum, indium, gallium, bismuth or the like to zinc or zinc alloy powder. The method of adhering the effective metal to the zinc or zinc alloy has been proposed in Japanese Patent Laid-open (Kokai) Nos. **60-1775** and **60-236456**. In the method proposed in the above-identified publications, the effective metal and zinc powder or zinc alloy powder are reacted for substitution in an acid solution. On the other hand, Japanese Patent Laid-open No. **1-105466** discloses a method for adhering the effective metal by directly putting oxide or hydroxide of the effective metal in a gel form alkaline electrolyte.

However, in case of the method by reaction for substitution, since the zinc or the zinc alloy powder is put in the acid solution, in which the effective metal is previously solved, and then mixed therewith by stirring, it is required substantial stirring period in order to uniformly adhere the effective metal on the surface of zinc or zinc alloy powder. Furthermore, drying process is required after stirring and mixing process, process becomes complicate.

On the other hand, in case of the method by directly putting the effective metal into the gel form electrolyte and then stirring for mixing, it also requires substantial period for uniformly distributing the effective metal relative to zinc or zinc alloy. Furthermore, by continuing stirring for long period, hydrogel structure can be destroyed to cause lowering of viscosity resulting in secondary agglomeration or precipitation of the powder.

As is well known, gel form negative electrodes are employed as the negative electrodes for the conventional alkaline battery. The gel form negative electrode is typically formed by mixing and kneading zinc powder, alkaline electrolyte and a gelling agent. The gelling agent is added for maintaining the zinc powder in uniformly distributed gel form, for increasing contacting surface area of the zinc powder and for improving reaction efficiency.

As the gelling agent, powder form gelling agent and granular gelling agent which can hold the electrolyte are typically used. The powder form gelling agent is typically carboxymethyl cellulose (CMC), poly acrylate or salts thereof. On the other hand, the granular gelling agent is typically, cross-linking and branching type poly (meta) acrylate or salts thereof as solely used or the gelling agent containing the same as primary component.

However, in case of the gel form negative electrode using the powder state gelling agent, the gel form electrolyte forming the gel form negative electrode can cause flowing in response to strong impact, such as that applied by falling down to cause destroying uniformity of distribution of zinc powder and to cause local concentration of the zinc powder. This degrades contacting condition between zinc powder particles or between zinc powder and the negative collector and thus results in lowering of performance of the battery. In the prior art, a small amount of mercury has been used for avoiding such problem. However, in the ecological viewpoint, it is highly desirable to avoid mercury.

On the other hand, in case of the granular gelling agent, the granular gelling agent swells by absorbing electrolyte and fills the gap between zinc powder particles to restrict movement of the zinc powder particles upon exertion of vibration or impact. This is effective for preventing the battery from lowering the performance due to lowering of uniformity of zinc distribution. On the other hand, even when discharging of battery is processed, the electrolyte absorbed in the granular gelling agent tends to be held therein. This creates a problem in that, degradation of heavy load discharge performance and low temperature discharge performance cannot be satisfactorily eliminated.

In order to solve the problems set forth above, various attempts, such as use of powder state gelling agent and the granular gelling agent in combination or so forth, have been made. However, no attempt has successfully achieved satisfactory improvement.

It is an object of the present invention to provide a process for forming a negative electrode of an alkaline battery which can achieve uniform mixing and distribution of a zinc or zinc alloy powder and an effective metal in a short period.

In order to accomplish the above-mentioned object, there is provided a process for forming a negative electrode comprises the steps of dry mixing one or more selected among oxide or hydroxide of indium, lead, gallium, bismuth, with zinc or zinc alloy powder to form a dry mixture, putting the dry mixture thus formed into a gelatinized alkaline electrolyte, and stirring and dispersing the mixture in the gelatinized alkaline electrolyte.

In the alternative, a process for forming a negative electrode comprises the steps of dry mixing one or more oxide or hydroxide of the above-mentioned metals, zinc or zinc alloy powder, and powder state gelling agent to form a mixture, putting the mixture into an electrolyte, and then mixing and dispersing the mixture in the electrolyte.

In case of the process, in which the effective metal and zinc or zinc alloy powder is directly mixed in the dry condition, the drying process which is required in the conventional process employing substitution reaction, can be eliminated. In addition, when the effective metal and the zinc or zinc alloy powder is put in the alkaline electrolyte in the mixed condition, the stirring period required for obtaining uniform mixing and distribution can be significantly shortened. Furthermore, by mixing the powder state gelling agent in addition, gelation of the electrolyte is progressed simultaneously with dispersing of the zinc or zinc alloy and the effective metal.

By the process for producing the negative electrode of the alkaline battery according to the present invention, the production process can be simplified in comparison with that in the conventional process. Therefore, production efficiency can be significantly improved. Also, in case that the mixture is mixed with the gelatinized alkaline electrolyte after dry mixing, stirring period required for achieving uniformly dispersed mixing can be shortened to approximately 10 minutes. This apparently contributes for improving production efficiency. Furthermore, the problem due to breakage of the gel structure will never been caused. Accordingly, the alkaline battery thus obtained has high leak-proofing ability. Therefore, the method of producing the negative electrode is suitable for avoiding mercury and uniformly adhering the effective metal on the zinc or zinc alloy powder, in the alkaline battery.

Other objects and advantages of the present invention will become clear from the further detailed description given herebelow in terms of the preferred embodiment of the present invention.

The present invention will be understood more fully from the detailed description given herebelow and from the accompanying drawings illustrating the preferred embodiment of the invention, which, however, should not be taken to be limitative to the invention, but are for explanation and understanding only.

In the drawings:
**Fig. 1** is a graph showing relationship between stirring and mixing period and leakage rate with respect to gel form alkaline electrolyte in examples 1 and 2 of the present invention;
**Fig. 2** is a graph showing relationship between stirring and mixing period and leakage rate in case that the zinc alloy powder is solved in InCl₃ solution in a comparative example 1;
**Fig. 3** is a graph showing relationship between stirring and mixing period and leakage rate with respect to gel form alkaline electrolyte in a comparative example 2; and
**Fig. 4** is a cross section showing construction of a cylindrical alkaline battery.

Preferred embodiments of the present invention with comparative examples will be discussed herebelow. The composition ratio of the basic materials forming the gel form negative electrode is the same for all of the embodiments and the comparative examples. It should be noted that though the following discussion will be given in terms of the gel form negative electrode with typical composition as shown in the following table, the present invention is equally applicable for any other compositions of the negative electrodes for the alkaline battery.

Also, in the shown embodiments and the comparative examples, pure indium is selected as a material of the effective metal to be added, which is known as relatively high effect in non-mercury battery. However, various metallic materials to form the effective metal are obvious to those skilled in the art. Oxide or hydroxide of lead, gallium, bismuth solely or in combination form the effective metal to be added.

### [EXAMPLE 1]

**TABLE 1**

| Blended Material and Composition Ratio for Gel Form Negative Electrode | |
|---|---|
| (1) Gelling Agent (Polyacrylic Acid) | 4.5 Wt parts |
| (2) 40 Wt% Potassium Hydroxide Electrolyte (saturated ZnO) | 250 Wt parts |
| (3) Zinc Alloy Powder (Zn - 500 ppm Pb) | 430 Wt parts |
| (4) Indium Oxide (In₂O₃) | 0.1 Wt parts |
| Total | 684.6 Wt parts |

It should be noted that, when indium hydroxide is selected in place of the indium oxide, converting with equivalent of indium, 0.12 parts by weight of indium hydroxide will be added for 430 parts by weight of zinc alloy powder. On the other hand, an average grain size of the zinc alloy powder was approximately 150 µm, an average grain size of indium oxide was approximately 5 µm, and the average grain size of the gelling agent in a form of a dry powder was 10 µm.

### PRODUCTION OF GEL FORM NEGATIVE ELECTRODE

Among the components listed above, polyacrylic acid (1) and potassium hydroxide electrolyte (2) were preliminarily mixed to prepare gel form alkaline electrolyte. Also, the zinc alloy powder (3) and indium oxide (4) were mixed by dry mixing to form a dry mixture. Mixing was performed by using ribbon blender with preventing variation of grain size. Stirring and mixing period was approximately 60 sec. Next, the dry mixture of the zinc alloy powder (3) and the indium oxide (4) is put in the gel form alkaline electrolyte. Then, stirring and mixing is performed for completing the gel form negative electrode. The gel form negative electrode is applicable for various types of batteries, such as cylindrical battery, button type battery or so forth. It should be noted that, since the zinc alloy powder and the indium oxide are mixed in the dry condition, the mixture will not be affected even when it is left for a long period. Therefore, the order of process is not necessarily specified to first prepare the alkaline electrolyte and then mix the zinc alloy powder (3) and indium oxide (4).

### [EXAMPLE 2]

Among the component of the above-mentioned example 1, polyacrylic acid (1), the zinc alloy powder (3) and indium oxide (4) were dry mixed for forming a dry mixture. For mixing, ribbon blender was used. Stirring and mixing was performed for approximately 60 sec. Then, the dry mixture of polyacrylic acid (1), the zinc alloy powder (3) and indium oxide (4) was put in a preliminarily prepared alkaline electrolyte. Then, stirring and mixing was performed to complete the gel form negative electrode. This gel form electrode is applicable for various types of batteries, such as a cylindrical battery, button type battery or so forth.

### [LEAK-PROOF ABILITY TEST FOR EXAMPLES 1 AND 2]

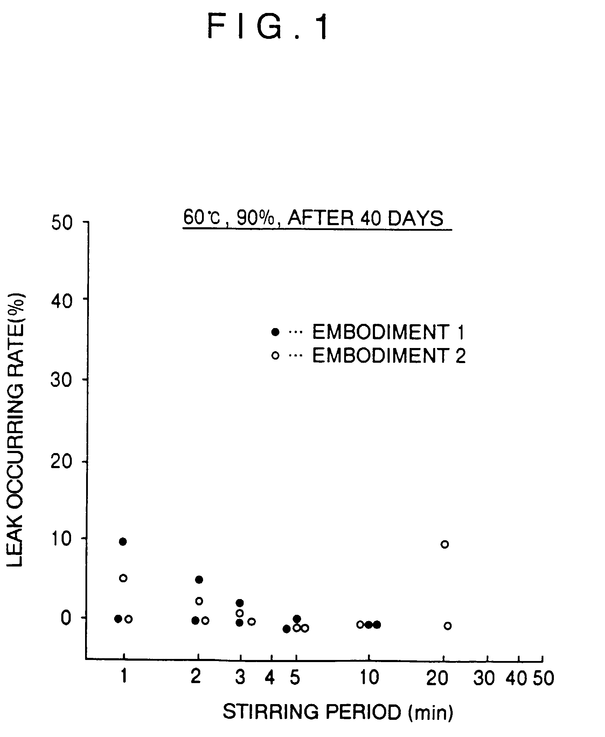

By varying the stirring period for stirring and mixing in the electrolyte from 1 min. to 20 min. samples of the gel form negative electrodes were prepared. The samples were filled in LR6 type cylindrical alkaline batteries. The batteries thus produced are left under an atmosphere of 90% of relative humidity and 60 °C of temperature. After 40 days, leakage occurring rate was checked. The results of the test is shown in **Fig. 1**. In **Fig. 1**, the white dots show the leakage occurring rate of the example 1, and the black dots show the leakage occurring rate of the example 2. Number of respective samples were 100, and number of lot were 2 kinds. Variation between respective lots was also inspected.

As can be clear from the leakage occurring rate shown in **Fig. 1**, although certain extent of variation between lots, the leakage occurring rate for the samples, for which the stirring period was 1 through 2 min., was 0 to 10%. When the stirring period is extended to be 5 to 10 min., the leakage occurring rate can be further reduced, and becomes substantially zero at the stirring period of 10 min. In this last case, no variation between lots could be observed.

It should be noted, when stirring was performed for 20 min., the leakage occurring rate is increased. It is considered that increasing of the leakage occurring rate is caused in that the gel structure was destroyed by stirring for long period to cause lowering of viscosity of the gel form negative electrode to cause secondary agglomeration or so forth. Accordingly, the preferred stirring and mixing period is approximately 10 min.

As set forth above, the results shown in **Fig. 1** shows the fact that, by preliminarily performing dry mixing, the indium oxide uniformly adheres on each particle of the zinc alloy powder, and the desired performance can be obtained by short period stirring only for dispersion in the alkaline electrolyte.

### [COMPARATIVE EXAMPLE 1]

In the composition shown in the example 1, the amounts of the polyacrylic acid (1) and potassium hydroxide electrolyte (2) were set equal to each other. These two components were preliminarily mixed to form a gel form alkaline electrolyte. On the other hand, as indium, InCl₃ having equivalent of indium equal to that in the foregoing examples was used. InCl₃ was solved in a pure water to obtain acid solution. To this acid solution, the zinc alloy powder in the same amount to the foregoing examples are put. After stirring for a period of time, varied between 2 min. to 30 min., the water was evaporated in a vacuum dryer at a temperature of 60 °C for drying. The dry powder thus obtained was put in the above-mentioned gel form electrolyte, and stirred and mixed for 10 min. for completing the gel form negative electrode.

### [LEAK-PROOF ABILITY TEST FOR COMPARATIVE EXAMPLE 1]

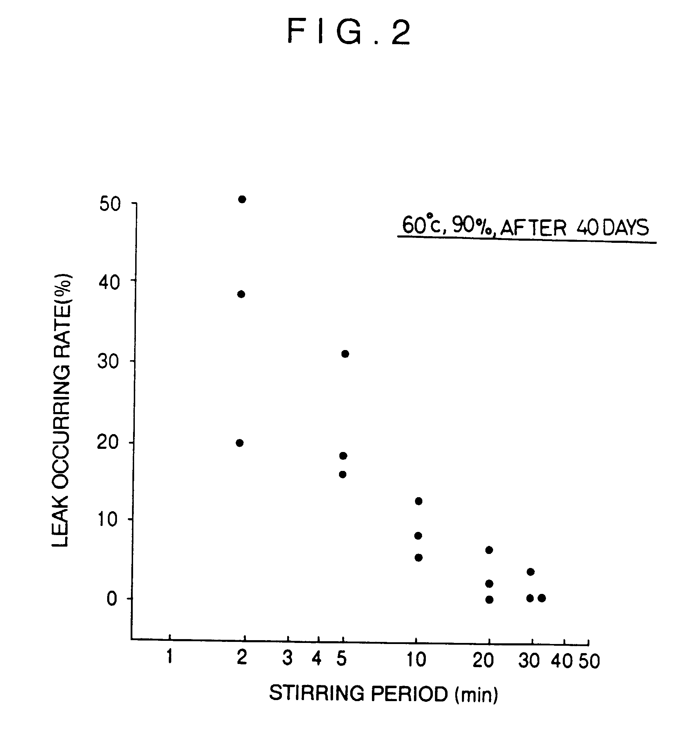

In the comparative example 1, samples of the gel form negative electrode were prepared by employing zinc alloy powder on which indium was adhered by varying stirring period in the acid solution, in which InCl₃ is already solved, from 2 min. to 30 min. The samples of the gel form negative electrode was filled in LR6 type alkaline battery. The batteries thus produced are left under an atmosphere of 90% of relative humidity and 60 °C of temperature. After 40 days, leakage occurring rate was checked. The results of the test is shown in **Fig. 2**. Number of respective samples were 100, and number of lot were 3 kinds. Variation between respective lots was also inspected.

As can be clear from the leakage occurring rate shown in **Fig. 2**, the leakage occurring rate for the samples, for which the stirring period was 2 min., was 20 to 50% and thus unacceptably high. Also at 2 min. of stirring period, substantial fluctuation between lots was observed. By expanding the stirring period, the leakage occurring rate is decreased accordingly, and the minimum rate was reached at the stirring for 30 min. However, requirement for 30 min. stirring for each lot in order to adhere indium on the zinc alloy powder implies unacceptable for industrial application in view point of production efficiency.

### [COMPARATIVE EXAMPLE 2]

In the composition of the example 1, polyacrylic acid (1) and potassium hydroxide electrolyte (2) are mixed to preliminarily form the gel form alkaline electrolyte. The zinc alloy powder (3) and indium oxide (4) in the same amounts to the foregoing example 1 were simultaneously put in the prepared gel form alkaline electrolyte. Then, by stirring and mixing, the gel form negative electrode was completed.

### [LEAK-PROOF ABILITY TEST FOR COMPARATIVE EXAMPLE 2]

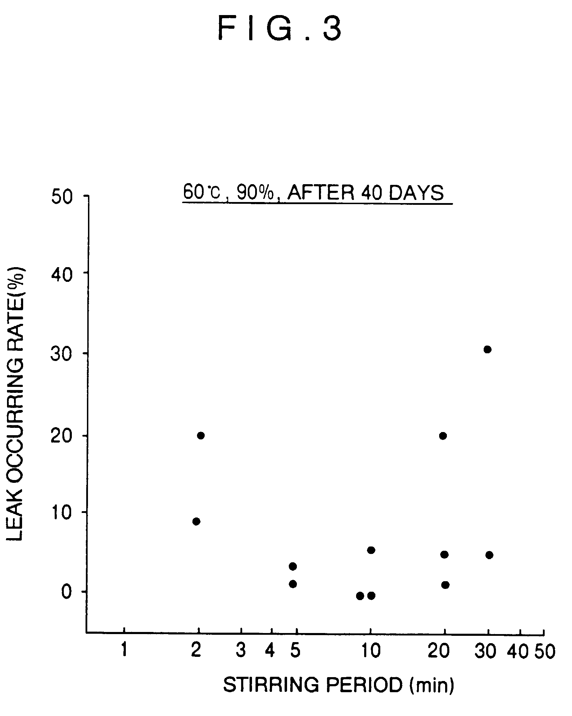

In the comparative example 1, samples of the gel form negative electrode were prepared by varying stirring period in the electrolyte from 2 min. to 30 min. The samples of the gel form negative electrode was filled in LR6 type alkaline battery. The batteries thus produced are left under an atmosphere of 90% of relative humidity and 60 °C of temperature. After 40 days, leakage occurring rate was checked. The results of the test is shown in **Fig. 3**. Number of respective samples were 100, and number of lot were 2 or 3 kinds. Variation between respective lots was also inspected.

As can be clear from the leakage occurring rate shown in **Fig. 3**, the leakage occurring rate for the samples, for which the stirring period was 2 min., was 20 to 50% and thus unacceptably high. Also at 2 min. of stirring period, substantial fluctuation between lots was observed. When the stirring period is in a range of 5 to 10 min. the leakage occurring rate is decreased accordingly, and the minimum rate, e.g. approximately 5% was reached at the stirring for 10 min. However, when the stirring period is further extended in a range of 20 to 30 min, the leakage occurring rate is increased. Also, fluctuation between lots becomes greater. It is considered that increasing of the leakage occurring rate is caused in that the gel structure was destroyed by stirring for long period to cause lowering of viscosity of the gel form negative electrode to cause secondary agglomeration or so forth. Therefore, the leak occurring rate cannot be satisfactorily lowered.

As can be appreciated from the discussion hereabove, with the foregoing examples 1 and 2. the effective metal as a replacement of mercury, can be uniformly adhered on each of individual zinc or zinc alloy powder particles in a short stirring period.

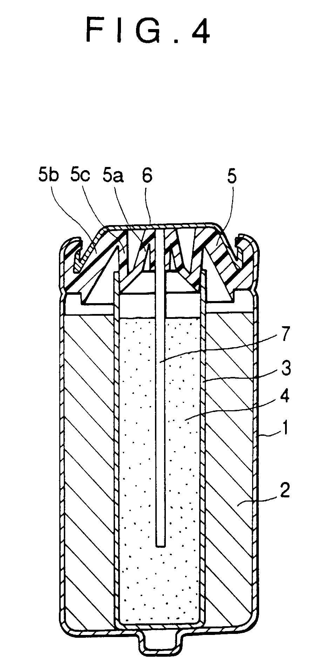

**Fig. 4** shows a cross section of a cylindrical alkaline battery. As seen, the shown construction of the cylindrical alkaline battery includes a cylindrical positive pole can **1**. A positive pole composition **2** composed of manganese dioxide and graphite , a separator **3** and a gel form negative electrode **4** are arranged in the positive pole can **1** in order in coaxial arrangement.

A negative pole terminal plate **6** is arranged in an opening portion of the positive pole can **1** via an electrically insulative seal gasket **5**. The edge portion of the positive pole can **1** is clamped inwardly so that the outer circumference of the seal gasket **5** is clamped between the clamped edge of the opening portion and the outer circumferential portion of the negative pole terminal plate **6** in leak-proofing fashion. The seal gasket **5** includes a central boss portion **5a**, an outer circumferential portion **5b** and a connecting portion **5c** interpositioned between the central boss portion and the outer circumferential portion.

On the inner center portion of the negative pole terminal plate, a negative pole collector **7** is fixed by spot welding. The negative pole collector **7** extends through a center opening defined through the central boss portion **5a** of the seal gasket **5**. Furthermore, for the central boss section **5a**, a seal cap **8** is fitted from the inside of the battery.

When mercury is avoided from the negative electrode **4**, the conventionally known brass or other pure metal can be employed as the negative pole collector **7**. Preferably, plating of solder, tin, indium or so forth is provided on the surface of the metal collector so as to further restrict generation of hydrogen from the zinc powder or zinc alloy powder.

As the seal cap **8** for the alkaline battery, in which mercury is avoided from the gel form negative electrode **4**, if the conventional seal cap which is formed by punch forming from a tin plated steel plate, the flush formed through punching process and exposing the elemental iron may promote generation of the hydrogen gas to degrade leak-proof capability of the battery.

Accordingly, it is preferred to form the seal cap **8** of a brass for restricting generation amount of the hydrogen gas. In this case, if degree of amalgamation is relatively high, such as greater than or equal to 0.6 Wt%, dispersion of mercury may be caused along crystal interface to lower the toughness of the seal cap to easily cause crack or to make it difficult to maintain necessary seal strength. However, according to the present invention, since mercury can be completely avoided, such problem will never be caused.

Furthermore, when the amalgamation degree is restricted lower than or equal to 1.5 Wt% or mercury is completely avoided, leak-proofing ability can be improved by employing the seal cap **8** formed by a plate material which is formed by solder plating on a brass blank plate. It is considered that such effect is achieved because that the solder plating layer prevents local cell from being formed between the zinc or zinc alloy powder and the seal cap and thus eliminate generation of hydrogen.

For demonstrating performance of the brass seal cap, seal caps **8** were prepared from steel plate, brass plate and solder plated brass plate. Using these seal caps, respectively 60 LR6 type cylindrical alkaline batteries are formed with gel form electrodes having respective amalgamation degree of 1.5 Wt%, 0.15 Wt% and 0 Wt%. These batteries are stored in an atmosphere of 90% of relative humidity and 60 °C of temperature, for 20 to 100 days for checking number of batteries causing leakage. The results are shown in the following table 2.

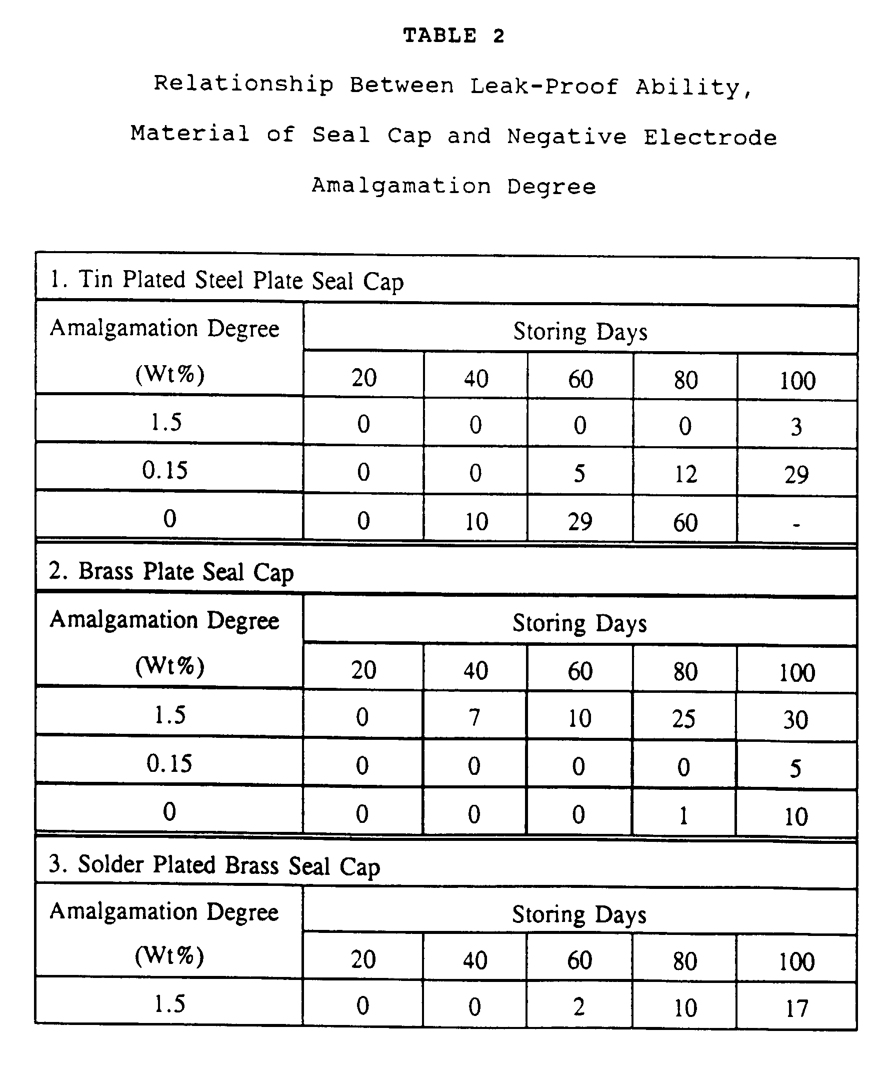

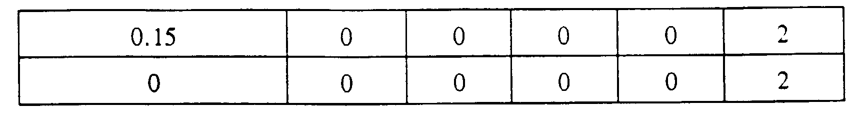

It should be noted that although the foregoing discussion has been concentrated for the cylindrical battery, the present invention is equally applicable for variety of configurations or structures of alkaline batteries.

Although the invention has been illustrated and described with respect to exemplary embodiment thereof, it should be understood by those skilled in the art that the foregoing and various other changes, omissions and additions may be made therein and thereto, without departing from the scope of the present invention. Therefore, the present invention should not be understood as limited to the specific embodiment set out above but to include all possible embodiments within the scope of the appended claims.

## Claims

1. A method for producing a gel form negative electrode for a mercury-free alkaline battery, comprising the steps of:
preparing a dry mixture of one or more of oxide or hydroxide of indium, lead, gallium and bismuth and a zinc or zinc alloy powder through dry mixing;
putting said dry mixture into a gel form alkaline electrolyte; and
mixing and dispersing the dry mixture in the gel form alkaline electrolyte.

2. A method as set forth in claim 1, wherein said preparation of said dry mixture is performed by dry mixing one or more of said metal oxide or metal hydroxide, said zinc or zinc alloy powder and a powder state gelling agent, and said putting step is performed by putting said dry mixture into an alkaline electrolyte.

3. A method as set forth in claim 1, wherein said alkaline electrolyte is potassium hydroxide electrolyte.

4. A method as set forth in claim 2, wherein said alkaline electrolyte is potassium hydroxide electrolyte.

5. A method as set forth in claim 1, wherein said mixing and dispersing step is performed at least for 5 minutes.

6. A method as set forth in claim 5, wherein said mixing and dispersing step is performed for about 10 minutes.

7. A method as set forth in claim 1, wherein said step of preparing dry mixture is performed by mixing one or more of said metal oxide or metal hydroxide and said zinc or zinc alloy powder for approximately 60 seconds.

8. An alkaline battery comprising a positive electrode and a gel form negative electrode which is produced avoiding mercury through the steps of:
preparing a dry mixture of one or more of oxide or hydroxide of indium, lead, gallium and bismuth and a zinc or zinc alloy powder through dry mixing;
putting said dry mixture into a gel form alkaline electrolyte; and
mixing and dispersing the dry mixture in the gel form alkaline electrolyte.

9. A method for producing a gel form negative electrode of a mercury-free alkaline battery comprising the steps of:
preparing a gel form alkaline electrolyte by mixing potassium hydroxide electrolyte and polyacrylic acid;
preparing a dry mixture of a zinc or zinc alloy powder and indium oxide by dry mixing;
putting said dry mixture to said gel form alkaline electrolyte; and
stirring said gel form alkaline electrolyte with said dry mixture for a predetermined period of time for mixing and dispersing said dry mixture.

10. A method for producing a gel form negative electrode of a mercury-free alkaline battery comprising the steps of:
preparing a dry mixture of a zinc or zinc alloy powder and indium oxide and polyacrylic acid by dry mixing;
putting said dry mixture to a potassium hydroxide electrolyte; and
stirring said potassium hydroxide electrolyte with said dry mixture for a predetermined period of time for mixing and dispersing said dry mixture.

11. An alkaline battery comprising a positive electrode and a gel form negative electrode which is produced avoiding mercury through the steps of:
preparing an alkaline electrolyte by mixing potassium hydroxide electrolyte and polyacrylic acid;
preparing a dry mixture of zinc or zinc alloy powder and indium oxide by dry mixing;
putting said dry mixture to said gel form alkaline electrolyte; and
stirring said gel form alkaline electrolyte with said dry mixture for a predetermined period of time for mixing and dispersing said dry mixture.

12. An alkaline battery comprising a positive electrode and a gel form negative electrode which is produced avoiding mercury through the steps of:
preparing a dry mixture of a zinc or zinc alloy powder and indium oxide and polyacrylic acid by dry mixing;
putting said dry mixture to said potassium hydroxide electrolyte; and
stirring said potassium hydroxide electrolyte with said dry mixture for a predetermined period of time for mixing and dispersing said dry mixture.

## Patentansprüche

1. Ein Verfahren zur Herstellung einer gelförmigen negativen Elektrode für eine quecksilberfreie alkalische Batterie, umfassend die Schritte:
des Zubereitens eines trockenen Gemisches von einem oder mehreren Indium-, Blei-, Gallium- und Wismutoxiden bzw. -hydroxiden und einem Zink- bzw. Zinklegierungspulver durch trockenes Mischen;
des Einführens des besagten trockenen Gemisches in einen gelförmigen alkalischen Elektrolyt; und
des Mischens und Dispergierens des trockenen Gemisches in dem gelförmigen alkalischen Elektrolyt.

2. Ein Verfahren nach Anspruch 1, bei dem die besagte Zubereitung des besagten trockenen Gemisches durch trockenes Mischen von einem oder mehreren der besagten Metalloxide bzw. Metallhydroxide, des besagten Zink- bzw. Zinklegierungspulvers und eines pulverförmigen Geliermittels durchgeführt und der besagte Einführungsschritt durch Einführen des besagten trockenen Gemisches in einen alkalischen Elektrolyt durchgeführt wird.

3. Ein Verfahren nach Anspruch 1, bei dem der besagte alkalische Elektrolyt Kaliumhydroxidelektrolyt ist.

4. Ein Verfahren nach Anspruch 2, bei dem der besagte alkalische Elektrolyt Kaliumhydroxidelektrolyt ist.

5. Ein Verfahren nach Anspruch 1, bei dem der besagte Misch- und Dispergierschritt mindestens 5 Minuten lang durchgeführt wird.

6. Ein Verfahren nach Anspruch 5, bei dem der besagte Misch- und Dispergierschritt etwa 10 Minuten lang durchgeführt wird.

7. Ein Verfahren nach Anspruch 1, bei dem der besagte Schritt der Zubereitung des trockenen Gemisches durch Mischen von einem oder mehreren der besagten Metalloxide bzw. Metallhydroxide und des besagten Zink- bzw. Zinklegierungspulvers etwa 60 Sekunden lang durchgeführt wird.

8. Eine alkalische Batterie, umfassend eine positive Elektrode und eine gelförmige negative Elektrode, die quecksilberfrei durch die Schritte:
des Zubereitens eines trockenen Gemisches von einem oder mehreren Indium-, Blei-, Gallium- und Wismutoxiden bzw. -hydroxiden und einem Zink- bzw. Zinklegierungspulver durch trockenes Mischen;
des Einführens des besagten trockenen Gemisches in einen gelförmigen alkalischen Elektrolyt; und
des Mischens und Dispergierens des trockenen Gemisches in dem gelförmigen alkalischen Elektrolyt erzeugt wird.

9. Ein Verfahren zur Herstellung einer gelförmigen negativen Elektrode einer quecksilberfreien alkalischen Batterie umfassend die Schritte:
des Zubereitens eines gelförmigen alkalischen Elektrolyts durch Mischen von Kaliumhydroxidelektrolyt und Polyacrylsäure;
des Zubereitens eines trockenen Gemisches eines Zink-bzw. Zinklegierungspulvers und von Indiumoxid durch trockenes Mischen;
des Einführens des besagten trockenen Gemisches in den besagten gelförmigen alkalischen Elektrolyt; und
des Verrührens des besagten gelförmigen alkalischen Elektrolyts mit dem besagten trockenen Gemisch während einer vorgegebenen Zeitspanne, um das besagte trockene Gemisch zu mischen und zu dispergieren.

10. Ein Verfahren zur Herstellung einer gelförmigen negativen Elektrode einer quecksilberfreien alkalischen Batterie, umfassend die Schritte:
des Zubereitens eines trockenen Gemisches eines Zink-bzw. Zinklegierungspulvers mit Indiumoxid und Polyacrylsäure durch trockenes Mischen;
des Einführens des besagten trockenen Gemisches in einen Kaliumhydroxidelektrolyt; und
des Verrührens des besagten Kaliumhydroxidelektrolyts mit dem besagten trockenen Gemisch während einer vorgegebenen Zeitspanne, um das besagte trockene Gemisch zu mischen und zu dispergieren.

11. Eine alkalische Batterie, umfassend eine positive Elektrode und eine gelförmige negative Elektrode, die quecksilberfrei durch die Schritte:
des Zubereitens eines alkalischen Elektrolyts durch Mischen von Kaliumhydroxidelektrolyt und Polyacrylsäure;
des Zubereitens eines trockenen Gemisches von Zink-bzw. Zinklegierungspulver und Indiumoxid durch trockenes Mischen;
des Einführens des besagten trockenen Gemisches in den besagten gelförmigen alkalischen Elektrolyt; und
des Verrührens des besagten gelförmigen alkalischen Elektrolyts mit dem besagten trockenen Gemisch während einer vorgegebenen Zeitspanne, um das besagte trockene Gemisch zu mischen und zu dispergieren, hergestellt wird.

12. Eine alkalische Batterie, umfassend eine positive Elektrode und eine gelförmige negative Elektrode, die quecksilberfrei durch die Schritte:
des Zubereitens eines trockenen Zink- bzw. Zinklegierungspulver, Indiumoxid und Polyacrylsäure enthaltenden Gemisches durch trockenes Mischen;
des Einführens des besagten trockenen Gemisches in den besagten Kaliumhydroxidelektrolyt; und
des Verrührens des besagten Kaliumhydroxidelektrolyts mit dem besagten trockenen Gemisch während einer vorbestimmten Zeitspanne, um das besagte trockene Gemisch zu mischen und zu dispergieren, hergestellt wird.

## Revendications

1. Procédé de production d'une électrode négative gélifiée pour une pile alcaline sans mercure, comprenant les étapes de :
préparation d'un mélange sec d'un ou plusieurs oxydes ou hydroxydes d'indium, de plomb, de gallium et de bismuth et d'une poudre de zinc ou d'alliage de zinc par mélange à sec ;
mise dudit mélange sec dans un électrolyte alcalin gélifié ; et
mélange et dispersion du mélange sec dans l'électrolyte alcalin gélifié.

2. Procédé selon la revendication 1, dans lequel ladite préparation dudit mélange sec est effectuée par mélange à sec d'un ou plusieurs desdits oxyde de métal ou hydroxyde de métal, de ladite poudre de zinc ou d'alliage de zinc et d'un agent gélifiant à l'état de poudre, et où ladite étape de mise dans un électrolyte est effectuée par mise dudit mélange sec dans un électrolyte alcalin.

3. Procédé selon la revendication 1, dans lequel ledit électrolyte alcalin est un électrolyte d'hydroxyde de potassium.

4. Procédé selon la revendication 2, dans lequel ledit électrolyte alcalin est un électrolyte d'hydroxyde de potassium.

5. Procédé selon la revendication 1, dans lequel ladite étape de mélange et de dispersion est réalisée pendant au moins 5 minutes.

6. Procédé selon la revendication 5, dans lequel ladite étape de mélange et de dispersion est réalisée pendant environ 10 minutes.

7. Procédé selon la revendication 1, dans lequel ladite étape de-préparation du mélange sec est réalisée par mélange d'un ou plusieurs desdits oxyde de métal ou hydroxyde de métal et de ladite poudre de zinc ou d'alliage de zinc pendant environ 60 secondes.

8. Pile alcaline comportant une électrode positive et une électrode négative gélifiée qui est produite en évitant le mercure par les étapes de :
préparation d'un mélange sec d'un ou plusieurs oxydes ou hydroxydes d'indium, de plomb, de gallium et de bismuth et d'une poudre de zinc ou d'alliage de zinc par mélange à sec ;
mise dudit mélange sec dans un électrolyte alcalin gélifié ; et
mélange et dispersion du mélange sec dans l'électrolyte alcalin gélifié.

9. Procédé de production d'une électrode négative gélifiée d'une pile alcaline exempte de mercure comprenant les étapes de :
préparation d'un électrolyte alcalin gélifié par mélange d'un électrolyte d'hydroxyde de potassium et d'acide polyacrylique ;
préparation d'un mélange sec d'une poudre de zinc ou d'alliage de zinc et d'oxyde d'indium par mélange à sec ;
mise dudit mélange sec dans ledit électrolyte alcalin gélifié ; et
agitation dudit électrolyte gélifié avec ledit mélange sec pendant une durée prédéterminée pour mélanger et disperser ledit mélange sec.

10. Procédé de production d'une électrode négative gélifiée d'une pile alcaline exempte de mercure comprenant les étapes de :
préparation d'un mélange sec d'une poudre de zinc ou d'alliage de zinc et d'oxyde d'indium et d'acide polyacrylique par mélange à sec ;
mise dudit mélange sec dans un électrolyte d'hydroxyde de potassium ; et
agitation dudit électrolyte d'hydroxyde de potassium avec ledit mélange sec pendant une durée prédéterminée pour mélanger et disperser ledit mélange sec.

11. Pile alcaline comprenant une électrode positive et une électrode négative gélifiée qui est produite en évitant le mercure par les étapes de :
préparation d'un électrolyte alcalin par mélange d'un électrolyte d'hydroxyde de potassium et d'acide polyacrylique ;
préparation d'un mélange sec de poudre de zinc ou d'alliage de zinc et d'oxyde d'indium par mélange à sec ;
mise dudit mélange sec dans un électrolyte alcalin gélifié ; et
agitation dudit électrolyte alcalin gélifié avec ledit mélange sec pendant une durée prédéterminée pour mélanger et disperser ledit mélange sec.

12. Pile alcaline comprenant une électrode positive et une électrode négative gélifiée qui est produite en évitant le mercure par les étapes de :
préparation d'un mélange sec d'une poudre de zinc ou d'alliage de zinc et d'oxyde d'indium et d'acide polyacrylique par mélange à sec ;
mise dudit mélange sec dans ledit électrolyte d'hydroxyde de potassium ; et
agitation dudit électrolyte d'hydroxyde de potassium avec ledit mélange sec pendant une durée prédéterminée pour mélanger et disperser ledit mélange sec.
